# EUROPÄISCHE PATENTSCHRIFT

(11) **EP 3 792 082 B1**
(45) Veröffentlichungstag und Bekanntmachung des Hinweises auf die Patenterteilung: **31.05.2023**
(21) Anmeldenummer: 20192368.7
(22) Anmeldetag: 24.08.2020
(51) Int. Cl.: B60C 13/00, B60C 11/00

(54) **FAHRZEUGREIFEN AUFWEISEND EINEN MARKIERUNGSBEREICH**
VEHICLE TYRE COMPRISING A MARKING AREA
PNEUS DE VÉHICULE COMPRENANT UNE ZONE DE MARQUAGE

(30) Priorität: 10.09.2019 DE 102019213765
(43) Veröffentlichungstag der Anmeldung: 17.03.2021
(73) Patentinhaber: Continental Reifen Deutschland GmbH, 30165 Hannover (DE)
(72) Erfinder: Jurco, Juraj, 30419 Hannover (DE); Rittweger, Stefan, 30419 Hannover (DE)
(74) Vertreter: Continental Corporation

(56) Entgegenhaltungen:
- EP-A1- 3 296 129
- EP-A1- 3 533 638
- WO-A1-2019/116993
- US-A1- 2010 258 231

## Beschreibung

Die Erfindung betrifft einen Fahrzeugreifen mit Seitenwänden und einem Laufstreifen und mit zumindest einem Markierungsbereich auf seiner äußeren Oberfläche aufweisend eine Anordnung von Rippen mit einer länglichen Erstreckung und zwei seitlichen Flanken, wobei die Rippen eine maximale Höhe H von 0,10 mm bis 0,80 mm, bevorzugt von 0,15 mm bis 0,70 mm aufweisen.

Derartige Markierungsbereiche werden in der Regel im Zuge der Vulkanisation des Reifens mittels einer formgebenden eine Negativkontur des Markierungsbereichs aufweisenden Vulkanisationsform in den Reifen geprägt. Eine strukturierte Oberfläche eines bereits vulkanisierten Reifens kann aber auch durch Abtragung, z.B. mittels Gravur, erreicht werden.

Derartige Markierungsbereiche sind bekannt. Auf der Reifenseitenwand werden sie z.B. zur Darstellung einer Markierung genutzt. Eine Markierung kann dabei eine Abbildung, ein Schriftzeichen, einen Firmennamen, ein Firmenlogos, eine Kennzeichnungen, eine Fläche, etc. umfassen. Der Markierungsbereich mit der Anordnung der Rippen kann dabei Teil der Markierung sein oder diese ganz oder teilweise umgeben.

Die Streuung von Licht an den Flanken der Rippen beeinflusst die Reflektion des Lichts an der Oberfläche des Reifens, wodurch die Helligkeitswirkung verändert ist. In der Regel wirken dabei mit solchen Rippen versehene Oberflächenbereiche dunkler als im Wesentlichen glatte, von derartigen Erhebungen freie, Oberflächenbereiche. Somit ist ein Kontrast in der an sich monochromen Oberfläche des Reifens, insbesondere der Seitenwand, ermöglicht. Hierdurch können Darstellungen von Markierungen verbessert sichtbar gemacht werden.

Eine Rippe ist im Rahmen der Erfindung eine längliche Erhebung. Sie kann eine Länge aufweisen, die größer ist als ihre mittlere Breite gemäß arithmetischem Mittelwert gemittelt über die Höhe. Die Rippe kann auch eine Länge aufweisen, die mindestens eineinhalbmal der Höhe der Rippe entspricht. Die Rippe kann auch eine Länge aufweisen, die mindestens dreimal ihrer Höhe entspricht.

Bekannt ist beispielsweise aus der DE 10 2012 105864 A1 ein Fahrzeugluftreifen, der auf seiner Seitenwand eine Vielzahl von linienförmigen Erhebungen zur Ausbildung eines Musters aufweist zur kontrastreichen Oberflächengestaltung und Hervorhebung einer Markierung. Die linienförmigen Erhebungen weisen dabei einen weitgehend symmetrischen Querschnitt auf.

Nachteilig an derartigen Ausführungsformen ist, dass die Gestaltungsmöglichkeiten gering sind. Die Bemühungen gehen dahin, die Kontrastwirkung noch gezielter zu beeinflussen. Gleichzeitig soll eine einfache und kostengünstige Herstellung der Vulkanisationsform sowie des mittels der Vulkanisationsform geformten Reifens ermöglicht sein.

Die WO 2019/116993 A1, EP 3 533 638 A1, EP 3 296 129 A1 und US 2010/258231 A1 offenbaren jeweils einen Fahrzeugluftreifen mit einer Vielzahl von Oberflächenerhebungen zur Kontrastgestaltung, welche einen asymmetrischen Querschnitt aufweisen.

Aufgabe der vorliegenden Erfindung ist eine verbesserte Beeinflussbarkeit der Kontrastwirkung bei gleichzeitig einfacher und kostengünstiger Produktion des Reifens.

Die Aufgabe wird durch drei alternative Ausführungsformen eines Fahrzeugluftreifens gemäß der drei unabhängigen Patentansprüchen gelöst.

Den drei alternativen Ausführungsformen ist gemein, dass in einem Querschnitt senkrecht zur länglichen Erstreckung betrachtet, auf einer Höhe H1, jede der zwei seitlichen Flanken einen Steigungswinkel mit einer Richtung senkrecht zur flächigen Erstreckung des Markierungsbereichs einschließt, und dass der Steigungswinkel der ersten Flanke der zwei seitlichen Flanken um mindestens 10°, bevorzugt um mindestens 15°, kleiner ist als der Steigungswinkel der zweiten Flanke der zwei seitlichen Flanken.

Es hat sich herausgestellt, dass durch eine solche asymmetrische Rippe die Kontrastwirkung eines solchen Markierungsbereichs noch gezielter beeinflussbar ist. Die Reflexionseigenschaften der asymmetrischen Rippen können für die erste Flanke und die zweite Flanke gezielt unterschiedlich gewählt werden. Der um mindestens 10°, bevorzugt um mindestens 15°, unterschiedliche Steigungswinkel der ersten und zweiten Flanke bezogen auf die Höhe H1 ermöglicht eine gezielte unabhängige Reflexion von Licht, das auf der Höhe H1 auf die erste Flanke trifft und von Licht, das auf der Höhe H1 auf die zweite Flanke trifft. Hierdurch ist eine gezielte Kontrastwirkung ermöglicht. Beispielsweise sind durch die unterschiedlichen Reflexionseigenschaften der Flanken Reflexionswechsel wie Flip-Flop-Effekte oder Hell-Dunkel-Effekte erzielbar. Bedeutend ist dabei, dass die gewünschte Kontrastwirkung lediglich durch die Ausrichtung der Flanken erreichbar ist. Eine in der Formenherstellung aufwändige Strukturierung der Flanken oder gekrümmte, gewinkelte oder gekreuzte Rippen sind nicht notwendig.

Somit ist die Kontrastwirkung verbessert beeinflussbar und gleichzeitig die Produktion des Reifens einfacher und kostengünstiger.

Ein Steigungswinkel ist dabei der Winkel, den die Flanke mit einer Richtung senkrecht zur flächigen Erstreckung des Markierungsbereichs einschließt. Weist die Flanke eine Krümmung auf, so wird der Winkel zwischen der Tangente der Flanke und der Richtung bestimmt.

Wesentlich dabei ist es, dass der Steigungswinkel bei gleichen Flanken auf der gleichen Höhe genommen wird. Zweckmäßig ist es, wenn die Höhe H1 ein Viertel, die Hälfte oder drei Viertel der Höhe H der Rippe beträgt. Beträgt die Höhe H1 ein Viertel der Höhe H, so unterscheiden sich die Flankenwinkel insbesondere im unteren Bereich der Rippenflanken. Beträgt die Höhe H1 die Hälfte der Höhe H, so unterscheiden sich die Flankenwinkel insbesondere im mittleren Bereich der Rippenflanken. Beträgt die Höhe H1 drei Viertel der Höhe H, so unterscheiden sich die Flankenwinkel insbesondere im oberen Bereich der Rippenflanken.

Verschiedene Ausführungsformen können einzeln oder gemeinsam eine besonders bevorzugte Kontrastwirkung erzielen. Die Rippen können weitgehend parallel zueinander angeordnet sein.

Die erste alternative Ausführungsform zeichnet sich dadurch aus, dass bei zumindest einer Rippe der Rippen, im Querschnitt betrachtet, über einen Höhenabschnitt von mindestens 1/3, bevorzugt von mindestens 2/3, der gesamten Höhe H, eine Flanke der zwei seitlichen Flanken einen konstanten Steigungswinkel aufweist und die andere Flanke der zwei seitlichen Flanken eine konvexe oder eine konkave Krümmung aufweist. Die Flanke mit dem konstanten Steigungswinkel kann die erste Flanke oder die zweite Flanke sein.

Zweckmäßig ist es, wenn der konstante Steigungswinkel 5° bis 20° beträgt.

Die Flanke mit weitgehend konstantem Steigungswinkel reflektiert vorrangig gerichtet. Die Flanke mit gekrümmter Fläche hingegen ermöglicht eine Winkelverteilung des reflektierten Lichtes. Der Effekt wird verstärkt, wenn mehrere oder alle Rippen der Anordnung derart ausgebildet sind.

Es ist auch eine Flanke mit einer Kombination aus konvexer Krümmung in der äußeren Hälfte der Rippe und konkaver Krümmung in der inneren Hälfte der Rippe zweckmäßig, jeweils betrachtet in Richtung der senkrechten Richtung.

Die zweite alternative Ausführungsform zeichnet sich dadurch aus,, dass bei zumindest einer Rippe der Rippen, im Querschnitt betrachtet, über einen Höhenabschnitt von mindestens 1/3, bevorzugt von mindestens 2/3, der gesamten Höhe H, die eine Flanke eine konkave Krümmung und die andere Flanke eine konvexe Krümmung aufweist. Die Flanke mit der konkaven Krümmung kann die erste Flanke oder die zweite Flanke sein.

Hierdurch sind noch stärkere Unterschiede in den Reflexionseigenschaften der beiden Flanken erreichbar. Der Vorteil wird verstärkt, wenn mehrere oder alle Rippen der Anordnung derart ausgebildet sind.

Die dritte alternative Ausführungsform zeichnet sich dadurch aus,, dass zumindest eine Rippe der Rippen auf einer Flanke ihrer beiden Flanken eine Substruktur aufweist, wohingegen die andere Flanke der beiden Flanken frei ist von einer solchen Substruktur. Die Flanke mit der Substruktur kann die erste Flanke oder die zweite Flanke sein.

Bei der Struktur kann es sich um eine Treppenstruktur handeln. Durch die unterschiedliche Oberflächengestaltung sind die Unterschiede in den Reflexionseigenschaften der beiden Flanken weiter verstärkt. Der Vorteil wird verstärkt, wenn mehrere oder alle Rippen der Anordnung derart ausgebildet sind.

Im Folgenden werden Ausführungsformen und Weiterbildungen der Erfindung dargelegt. Diese können sich, soweit nicht anders benannt, auf jede der drei alternativen Ausführungsformen beziehen.

Eine vorteilhafte Ausführungsform ist dadurch gegeben, dass ein Rippenpaar, bevorzugt alle Rippenpaare, aus zwei benachbarten weitgehend parallel zueinander angeordneten Rippen der Anordnung so ausgebildet ist, dass die erste Flanke der einen Rippe des Rippenpaares und die zweite Flanke der anderen Rippe des Rippenpaares einander zugewandt sind.

Durch eine derartige alternierende Anordnung an ersten Flanken und zweiten Flanken ist ein besonders ausgeprägter Flip-Flop Effekt erreichbar. Bevorzugt weisen die Rippen des zumindest einen Rippenpaares den gleichen Querschnitt auf.

Eine vorteilhafte Ausführungsform ist dadurch gegeben, dass ein Rippenpaar, bevorzugt alle Rippenpaare, aus zwei benachbarten weitgehend parallel zueinander angeordneten Rippen der Anordnung so ausgestaltet ist, dass die ersten Flanken der beiden Rippen des jeweiligen Rippenpaares oder die zweiten Flanken der beiden Rippen des jeweiligen Rippenpaares einander zugewandt sind. Hierdurch sind weitere vorteilhafte Kontrasteffekte erzielbar.

Bevorzugt weisen die Rippen des zumindest einen Rippenpaares dabei einen spiegelbildlichen Querschnitt auf.

Zweckmäßig ist es, wenn alle Rippen der Anordnung den gleichen Querschnitt aufweisen.

Eine vorteilhafte Ausführungsform ist aber auch dadurch gegeben, dass die Anordnung Rippen mit unterschiedlichem Querschnitt aufweist. Hierdurch kann die Kontrastwirkung noch gezielter eingestellt werden.

Vorteilhaft kann es sein, wenn die Anordnung dabei eine alternierende Anordnung von Rippengruppen aufweist, wobei jede Rippengruppe ein, zwei oder mehr Rippen gleichen Querschnitts umfasst und sich die Rippengruppen untereinander zumindest im Querschnitt ihrer Rippen voneinander unterscheiden.

Auch hierdurch kann die Kontrastwirkung noch gezielter eingestellt werden. Bei einer Rippe pro Rippengruppe und zwei Rippengruppen ergibt sich eine alternierende Anordnung von Rippen mit unterschiedlichem Querschnitt. Weist eine Rippengruppe zwei oder mehr Rippen auf, so ist eine gruppierte Anordnung der Rippen gleichen Querschnitts ermöglicht.

Sowohl die Seitenwände eines Reifens als auch der Laufstreifen tragen zur äußeren Oberfläche des Reifens bei. Vorteilhaft ist es, wenn eine oder beide Seitenwände des Reifens einen Markierungsbereich aufweisen. Hierdurch können Markierungen besonders kontrastreich dargestellt werden.

Vorteilhaft kann es auch sein, wenn der Laufstreifen einen solchen Markierungsbereich aufweist. Dieser kann auf einer mit der Fahrbahn in Kontakt tretenden Laufstreifenoberflächen oder in einer Rille, insbesondere in einem Rillengrund, eines profilierten Laufstreifens angeordnet sein.

Gemäß einer weiteren vorteilhaften Ausführungsform weist Markierungsbereich mehrere Flächen mit einer derartigen Anordnung auf, wobei die Flächen derart angeordnet sind, dass sie einen maschinenlesbaren Code, bevorzugt einen zweidimensionalen Code, besonders bevorzugt einen QR-Code, darstellen. Aufgrund der hervorragenden Kontrastwirkung der Anordnung eignet sich eine solche Anordnung hervorragend zur Darstellung eines maschinenlesbaren Codes, insbesondere zur Darstellung der üblicherweise dunkel dargestellten Flächen des Codes. Die üblicherweise hell dargestellten Flächen des Codes können durch eine weitgehend unbearbeitete Oberfläche bzw. im Vergleich zur Schraffurfläche glatte Oberfläche des Fahrzeugluftreifens ausgebildet sein.

Zweckmäßig ist es, wenn der Reifen ein Fahrzeugluftreifen ist. Es kann sich um einen Fahrzeugluftreifen für ein Fahrrad, für einen Personenkraftwagen, einen Van, ein SUV, einen Light-Truck, ein Nutzfahrzeug, ein Kraftrad oder einen Bus handeln. Besonders bevorzugt handelt es sich um einen Fahrzeugluftreifen für einen Personenkraftwagen. Derartige Fahrzeugluftreifen weisen in der Regel eine geringere Seitenwandhöhe auf als die anderen genannten Fahrzeugluftreifen. Hierdurch ist der Platz für die Anbringung von Zeichen wie Schrift oder bildliche Darstellungen in der Regel begrenzt. Für eine gute Lesbarkeit und/oder Erkennbarkeit ist somit eine hohe Kontrastwirkung besonders vorteilhaft.

Weitere Merkmale, Vorteile und Einzelheiten der Erfindung werden nun anhand der schematischen Zeichnungen, die Ausführungsbeispiele darstellen, näher erläutert. Dabei zeigt die
Fig. 1 einen Fahrzeugluftreifen aufweisend einen Markierungsbereich;
Fig. 2 bis 7 je ein Beispiel einer Rippe;
Fig. 8 bis 11 je ein Beispiel einer Anordnung an Rippen.

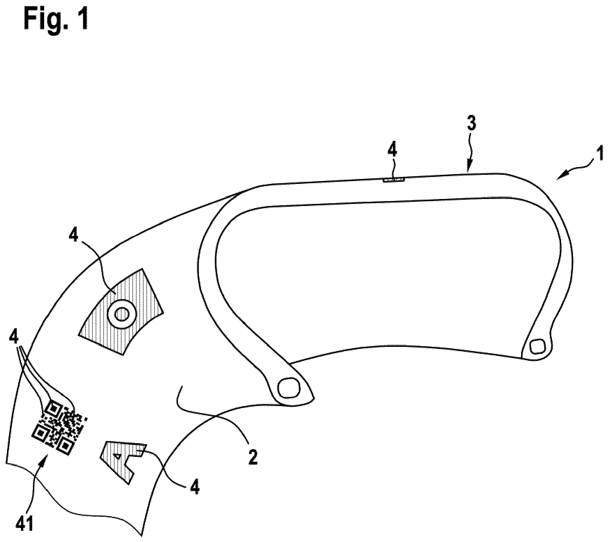

Die Figur 1 zeigt einen Fahrzeugluftreifen 1 mit Seitenwänden 2 und einem Laufstreifen 3 und mit zumindest einem Markierungsbereich 4 auf seiner äußeren Oberfläche, insbesondere auf zumindest einer der Seitenwände 2 und/oder dem Laufstreifen 3. Bei einer Anordnung am Laufstreifen 3 kann der Markierungsbereich 4 dabei insbesondere auch auf Rillenflanken und/oder Rillengründen von im Laufstreifen 3 verlaufenden Rillen oder am Laufstreifenauslauf, also an den außerhalb der Bodenaufstandsfläche zu den Seitenwänden verlaufenden Schulterflanken, oder an der Außenfläche des Laufstreifens, also an mit dem Untergrund in Kontakt tretenden Lauffläche, angebracht sein.

Der zumindest eine Markierungsbereich 4 weist eine Anordnung 42 von Rippen 5 mit einer länglichen Erstreckung und zwei seitlichen Flanken 6, 7 auf, wobei die Rippen 5 eine maximale Höhe H von 0,10 mm bis 0,80 mm, bevorzugt von 0,15 mm bis 0,70 mm, aufweisen. Hierbei schließt, in einem Querschnitt senkrecht zur länglichen Erstreckung betrachtet, auf einer Höhe H1 jede der zwei seitlichen Flanken 6, 7 einen Steigungswinkel 61, 61', 61",71, 71' mit einer Richtung 9 senkrecht zur flächigen Erstreckung des Markierungsbereichs 4 ein. Der Steigungswinkel 61, 61', 61" der ersten Flanke 6 der zwei seitlichen Flanken ist dabei um mindestens 10°, bevorzugt um mindestens 15°, kleiner als der Steigungswinkel 71, 71' der zweiten Flanke 7 der zwei seitlichen Flanken.

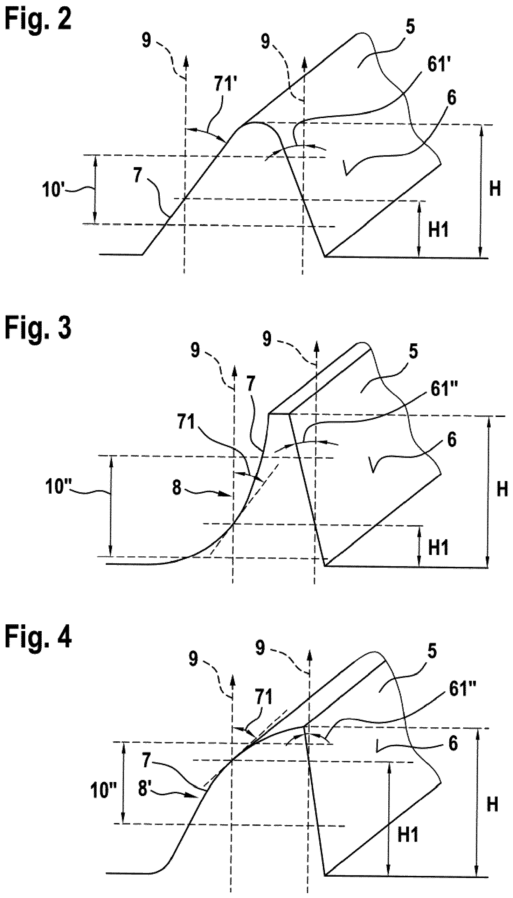

Der Steigungswinkel ist dabei der Winkel, den die Flanke 6,7 mit der Richtung 9 senkrecht zur flächigen Erstreckung des Markierungsbereichs 4 einschließt. Weist die Flanke eine Krümmung auf, so wird der Winkel zwischen der Tangente der Flanke und der Richtung bestimmt, siehe beispielsweise Figur 4, Winkel 71.

Die Rippen 5 können weitgehend parallel zueinander angeordnet sein.

Ein derartiger Markierungsbereich 4 eignet sich auch hervorragend zur Darstellung eines Codes 41, insbesondere eines zweidimensionalen Codes wie beispielsweise eines QR-Codes. Hierbei können die üblicherweise dunkel dargestellten Flächen des Codes einen derartigen Markierungsbereich 4 aufweisen.

Die Figuren 2 bis 7 zeigen jeweils einen Querschnitt durch einen Markierungsbereich 4. Dargestellt sind dabei Beispiele für geeignete Rippen 5 eines derartigen Markierungsbereichs 4. Die Steigungswinkel sind jeweils für beide Flanken auf der gleichen Höhe H1 genommen. Die Höhe H1 ist dabei beispielhaft auf einem Viertel, der Hälfte oder drei Vierteln der Höhe H gewählt. Je nach Ausführungsform kann aber auch eine andere Höhe H1 gewählt werden.

Die Figur 2 zeigt einen Querschnitt durch eine Rippe 5. Im Querschnitt betrachtet, über einen Höhenabschnitt 10' von mindestens 1/3, bevorzugt von mindestens 2/3, der Höhe H, weist die erste Flanke 6 einen konstanten Steigungswinkel 61' von 5° bis 20° und die zweite Flanke 7 einen konstanten Steigungswinkel 71' von 25° bis 65° auf.

Die Figuren 3 bis 5 zeigen ebenfalls jeweils einen Querschnitt durch eine Rippe 5. Im Querschnitt betrachtet, über einen Höhenabschnitt 10" von mindestens 1/3, bevorzugt von mindestens 2/3, der gesamten Höhe H, weist eine Flanke 6 der zwei seitlichen Flanken einen konstanten Steigungswinkel 61" auf und die andere Flanke 7 der zwei seitlichen Flanken weist eine konvexe Krümmung 8 oder eine konkave Krümmung 8' auf.

Dargestellt ist jeweils, dass die Flanke 6 mit konstantem Steigungswinkel 61" die erste Flanke ist. Es kann aber auch, insbesondere wenn die Höhe H1 anders gewählt wird, die zweite Flanke derart ausgebildet sein und dafür die erste Flanke eine entsprechende Krümmung aufweisen.

In der Figur 3 ist die Krümmung 8 konkav. Der konstante Steigungswinkel 61" kann 5° bis 20° betragen. Die Höhe H1 ist auf 1/4 der Höhe H genommen.

In der Figur 4 ist die Krümmung 8' konvex. Der konstante Steigungswinkel 61" kann 5° bis 20° betragen. Die Höhe H1 ist auf 3/4 der Höhe H genommen.

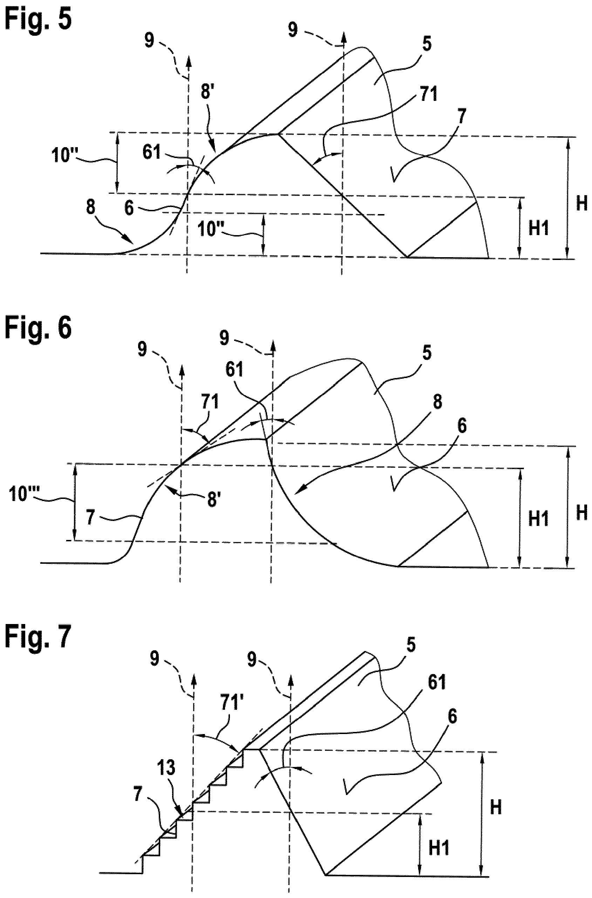

In der Figur 5 weist die andere Flanke 7 sowohl eine konvexe Krümmung 8' als auch eine konkave Krümmung 8 auf. Die Höhe H1 ist auf der Hälfte der Höhe H genommen. Der konstante Steigungswinkel 61" kann 25° bis 65° betragen.

Die Figur 6 zeigt einen Querschnitt durch eine Rippe 5, bei welcher, im Querschnitt betrachtet, über einen Höhenabschnitt 10‴ von mindestens 1/3, bevorzugt von mindestens 2/3, der gesamten Höhe H, die erste Flanke 6 eine konkave Krümmung 8 und die zweite Flanke 7 eine konvexe Krümmung 8' aufweist. Die Höhe H1 ist auf ¾ der Höhe H genommen.

Die Figur 7 zeigt einen Querschnitt einer Rippe 5, welche auf einer Flanke 6 ihrer beiden Flanken eine Substruktur 13 aufweist, wohingegen die andere Flanke 7 der beiden Flanken frei ist von einer solchen Substruktur. Die Höhe H1 ist genommen auf der Hälfte der Höhe H. Es kann auch die erste Flanke frei von einer Substruktur sein und die zweite Flanke eine derartige Substruktur 13 aufweisen.

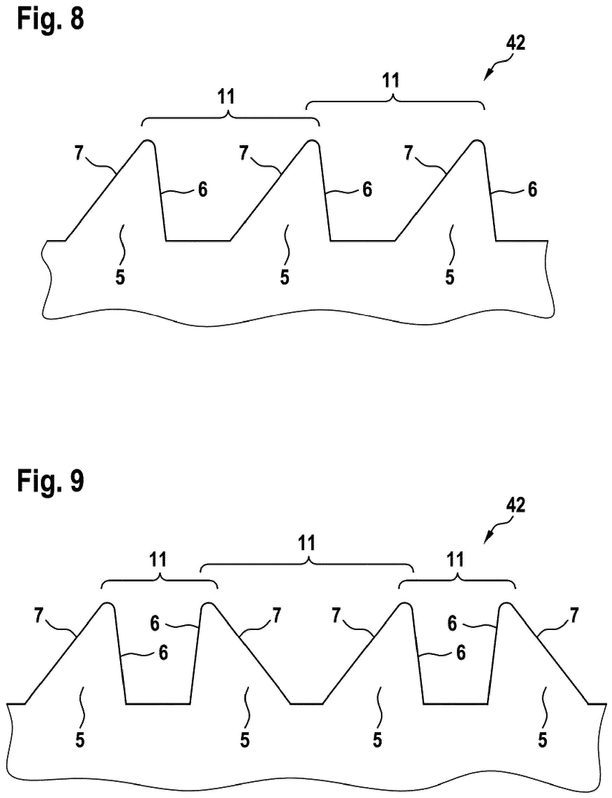

Die Figuren 8 und 9 zeigen unterschiedliche Beispiele für Querschnitte geeigneter Anordnungen 42 von Rippen 5 eines Markierungsbereichs 4 einer Oberfläche eines nicht erfindungsgemäßen Fahrzeugluftreifens.

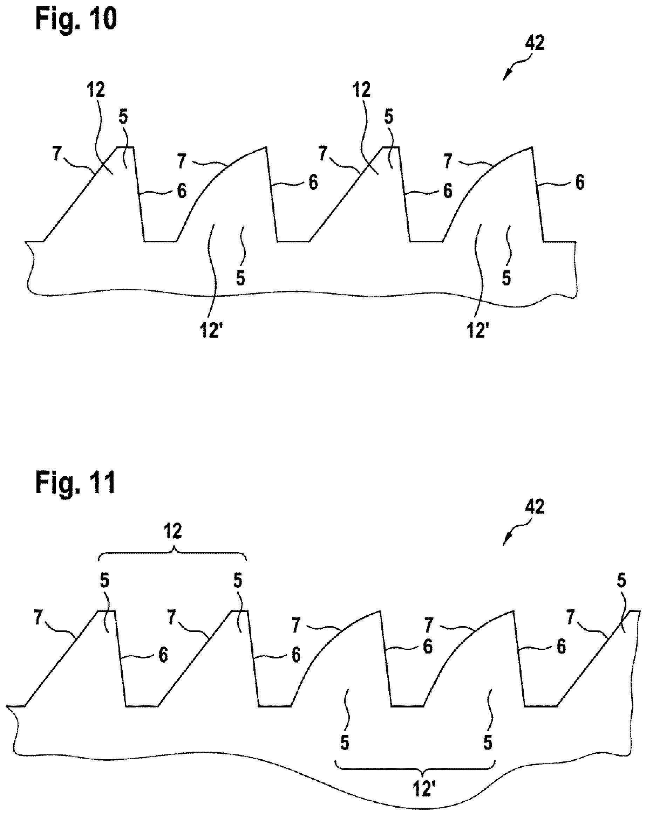

Die Figuren 10 und 11 zeigen unterschiedliche Beispiele für Querschnitte geeigneter Anordnungen 42 von Rippen 5 eines Markierungsbereichs 4 einer Oberfläche eines erfindungsgemäßen Fahrzeugluftreifens. Die Rippen 5 sind dabei weitgehend parallel zueinander angeordnet. Es kann sich um einen Markierungsbereich 4 des in der Figur 1 dargestellten Fahrzeugluftreifen 1 handeln.

Die Figur 8 zeigt eine Anordnung 42 an Rippenpaaren 11 aus j e zwei benachbarten weitgehend parallel zueinander angeordneten Rippen 5. Die Rippenpaare 11 sind so ausgebildet, dass die erste Flanke 6 der einen Rippe des Rippenpaares 11 und die zweite Flanke 7 der anderen Rippe des Rippenpaares 11 einander zugewandt sind. Alle Rippenpaare 11 können derart ausgebildet sein. Die Querschnitte der Rippen 5 können, müssen aber nicht, gleich ausgebildet sein. Dargestellt sind beispielsweise die in der Fig. 2 dargestellten Rippen 5. Die Rippen 5 können aber auch anders ausgebildet sein, insbesondere wie in den Figuren 3 bis 7.

Die Figur 9 zeigt einen Ausschnitt einer Anordnung 42 an Rippenpaaren 11 aus je zwei benachbarten weitgehend parallel zueinander angeordneten Rippen 5. Die Rippenpaare 11 sind so ausgebildet, dass die ersten Flanken 6 der beiden Rippen 5 des jeweiligen Rippenpaares 11 oder die zweiten Flanken 7 der beiden Rippen 5 des jeweiligen Rippenpaares 11 einander zugewandt sind. Die Querschnitte der Rippen 5 können, müssen aber nicht, spiegelbildlich zueinander sein. Dargestellt sind beispielsweise die in der Fig. 2 dargestellten Rippen 5. Die Rippen 5 können aber auch anders ausgebildet sein, insbesondere wie in den Figuren 3 bis 7. Alle Rippenpaare 11 können derart ausgebildet sein.

Die Figuren 10 und 11 zeigen Beispiele für Anordnungen 42 von weitgehend parallel zueinander ausgerichteten Rippen 5, wobei die Anordnung 42 Rippen 5 mit unterschiedlichem Querschnitt aufweist.

Die Anordnung 42 weist dabei eine alternierende Anordnung von zumindest zwei Rippengruppen 12, 12' auf, wobei jede Rippengruppe 12, 12' ein, zwei oder mehr Rippen 5 gleichen Querschnitts umfasst und sich die Rippengruppen 12,12' zumindest im Querschnitt ihrer Rippen 5 voneinander unterscheiden.

Die Figur 10 zeigt dabei eine Variante, in der jede Rippengruppe 12, 12' genau eine Rippe 5 umfasst. Es ergibt sich somit eine alternierende Anordnung der Rippen 5 unterschiedlichen Querschnitts.

Die Figur 11 zeigt dabei eine Variante, in der beide Rippengruppen 12, 12' genau zwei Rippen 5 umfassen.

### Bezugszeichenliste

### (Teil der Beschreibung)

- 1: Fahrzeugluftreifen
- 2: Seitenwand
- 3: Laufstreifen
- 4: Markierungsbereich
- 42: Anordnung
- 5: Rippe
- 6: erste Flanke
- 7: zweite Flanke
- 61, 61', 61",71, 71': Steigungswinkel
- 8: konkave Krümmung
- 8': konvexe Krümmung
- 9: senkrechte Richtung
- 10', 10", 10"`: Höhenabschnitt
- 11: Rippenpaar
- 12, 12': Rippengruppe
- 13: Substruktur
- 41: Code

- H: Höhe der Rippe
- H1: Höhe

## Patentansprüche

1. Fahrzeugreifen (1) mit Seitenwänden (2) und einem Laufstreifen (3) und mit zumindest einem Markierungsbereich (4) auf seiner äußeren Oberfläche, der zumindest eine Markierungsbereich (4) aufweisend eine Anordnung (42) von Rippen (5) mit einer länglichen Erstreckung und zwei seitlichen Flanken (6, 7),
• wobei die Rippen (5) eine maximale Höhe H von 0,10 mm bis 0,80 mm, bevorzugt von 0,15 mm bis 0,70 mm, aufweisen,
• wobei in einem Querschnitt senkrecht zur länglichen Erstreckung betrachtet, auf einer Höhe H1, jede der zwei seitlichen Flanken (6, 7) einen Steigungswinkel (61, 61', 61 ` `, 71, 71') mit einer Richtung (9) senkrecht zur flächigen Erstreckung des Markierungsbereichs (4) einschließt,
• und wobei der Steigungswinkel (61, 61', 61") der ersten Flanke (6) der zwei seitlichen Flanken um mindestens 10°, bevorzugt um mindestens 15°, kleiner ist als der Steigungswinkel (71, 71') der zweiten Flanke (7) der zwei seitlichen Flanken,
**dadurch gekennzeichnet, dass** bei zumindest einer Rippe (5) der Rippen,
• im Querschnitt betrachtet, über einen Höhenabschnitt (10") von mindestens 1/3, bevorzugt von mindestens 2/3, der gesamten Höhe H,
• eine Flanke (6) der zwei seitlichen Flanken einen konstanten Steigungswinkel (61") aufweist und
• die andere Flanke (7) der zwei seitlichen Flanken eine konvexe Krümmung (8') oder eine konkave Krümmung (8) aufweist.

2. Fahrzeugreifen (1) mit Seitenwänden (2) und einem Laufstreifen (3) und mit zumindest einem Markierungsbereich (4) auf seiner äußeren Oberfläche, der zumindest eine Markierungsbereich (4) aufweisend eine Anordnung (42) von Rippen (5) mit einer länglichen Erstreckung und zwei seitlichen Flanken (6, 7),
• wobei die Rippen (5) eine maximale Höhe H von 0,10 mm bis 0,80 mm, bevorzugt von 0,15 mm bis 0,70 mm, aufweisen,
• wobei in einem Querschnitt senkrecht zur länglichen Erstreckung betrachtet, auf einer Höhe H1, jede der zwei seitlichen Flanken (6, 7) einen Steigungswinkel (61, 61', 61",71, 71') mit einer Richtung (9) senkrecht zur flächigen Erstreckung des Markierungsbereichs (4) einschließt,
• und wobei der Steigungswinkel (61, 61', 61") der ersten Flanke (6) der zwei seitlichen Flanken um mindestens 10°, bevorzugt um mindestens 15°, kleiner ist als der Steigungswinkel (71, 71') der zweiten Flanke (7) der zwei seitlichen Flanken,
**dadurch gekennzeichnet, dass** bei zumindest einer Rippe (5) der Rippen,
• im Querschnitt betrachtet, über einen Höhenabschnitt (10‴) von mindestens 1/3, bevorzugt von mindestens 2/3, der gesamten Höhe H,
• eine Flanke (6) der zwei seitlichen Flanken eine konkave Krümmung (8) und die andere Flanke (7) eine konvexe Krümmung (8') aufweist.

3. Fahrzeugreifen (1) mit Seitenwänden (2) und einem Laufstreifen (3) und mit zumindest einem Markierungsbereich (4) auf seiner äußeren Oberfläche, der zumindest eine Markierungsbereich (4) aufweisend eine Anordnung (42) von Rippen (5) mit einer länglichen Erstreckung und zwei seitlichen Flanken (6, 7),
• wobei die Rippen (5) eine maximale Höhe H von 0,10 mm bis 0,80 mm, bevorzugt von 0,15 mm bis 0,70 mm, aufweisen,
• wobei in einem Querschnitt senkrecht zur länglichen Erstreckung betrachtet, auf einer Höhe H1, jede der zwei seitlichen Flanken (6, 7) einen Steigungswinkel (61, 61', 61 ` `, 71, 71') mit einer Richtung (9) senkrecht zur flächigen Erstreckung des Markierungsbereichs (4) einschließt,
• und wobei der Steigungswinkel (61, 61', 61") der ersten Flanke (6) der zwei seitlichen Flanken um mindestens 10°, bevorzugt um mindestens 15°, kleiner ist als der Steigungswinkel (71, 71') der zweiten Flanke (7) der zwei seitlichen Flanken,
**dadurch gekennzeichnet, dass** zumindest eine Rippe (5) der Rippen auf einer Flanke (6) ihrer beiden Flanken eine Substruktur (13) aufweist, wohingegen die andere Flanke (7) der beiden Flanken frei ist von einer solchen Substruktur.

4. Fahrzeugreifen (1) gemäß einem der vorhergehenden Ansprüche, **dadurch**
**gekennzeichnet, dass** zumindest ein Rippenpaar (11), bevorzugt alle Rippenpaare (11), aus zwei benachbarten weitgehend parallel zueinander angeordneten Rippen (5) der Anordnung (42) so ausgebildet ist,
dass die erste Flanke (6) der einen Rippe des Rippenpaares (11) und die zweite Flanke (7) der anderen Rippe des Rippenpaares (11) einander zugewandt sind.

5. Fahrzeugreifen (1) gemäß zumindest einem der vorhergehenden Ansprüche,
**dadurch gekennzeichnet, dass** ein Rippenpaar (11), bevorzugt alle Rippenpaare (11), aus zwei benachbarten weitgehend parallel zueinander angeordneten Rippen (5) der Anordnung (42) so ausgebildet ist, dass die ersten Flanken (6) der beiden Rippen (5) des jeweiligen Rippenpaares (11) oder die zweiten Flanken (7) der beiden Rippen (5) des jeweiligen Rippenpaares (11) einander zugewandt sind.

6. Fahrzeugreifen (1) gemäß zumindest einem der vorhergehenden Ansprüche,
**dadurch gekennzeichnet, dass** die Anordnung (42) Rippen (5) mit unterschiedlichem Querschnitt aufweist.

7. Fahrzeugreifen (1) gemäß zumindest Anspruch 6, **dadurch gekennzeichnet, dass** die Anordnung (42) dabei eine alternierende Anordnung von Rippengruppen (12, 12') aufweist, wobei jede Rippengruppe (12, 12') ein, zwei oder mehr Rippen (5) gleichen Querschnitts umfasst und sich die Rippengruppen (12,12') untereinander zumindest im Querschnitt ihrer Rippen (5) voneinander unterscheiden.

8. Fahrzeugreifen (1) gemäß zumindest einem der vorhergehenden Ansprüche,
**dadurch gekennzeichnet, dass** der Markierungsbereich (4) auf einer Seitenwand (2) oder einem Laufstreifen (3), bevorzugt auf einer Seitenwand, angeordnet ist.

9. Fahrzeugreifen (1) nach zumindest einem der vorhergehenden Ansprüche, **dadurch gekennzeichnet, dass** der Fahrzeugluftreifen (1) mehrere derartige Markierungsbereiche (4) aufweist, die derart angeordnet sind, dass sie einen maschinenlesbaren Code (41), bevorzugt einen zweidimensionalen Code, besonders bevorzugt einen QR-Code, darstellen.

## Claims

1. Vehicle tyre (1) with side walls (2) and a tread (3) and with at least one marking region (4) on its outer surface, the at least one marking region (4) having an arrangement (42) of ribs (5) with an elongate extent and two lateral flanks (6, 7),
• wherein the ribs (5) have a maximum height H of 0.10 mm to 0.80 mm, preferably of 0.15 mm to 0.70 mm,
• wherein, as viewed in a cross section perpendicular to the elongate extent, at a height H1, each of the two lateral flanks (6, 7) includes an inclination angle (61, 61', 61", 71, 71') with a direction (9) perpendicular to the areal extent of the marking region (4),
• and wherein the inclination angle (61, 61', 61") of the first flank (6) of the two lateral flanks is smaller by at least 10°, preferably by at least 15°, than the inclination angle (71, 71') of the second flank (7) of the two lateral flanks,
**characterized in that**, for at least one rib (5) of the ribs,
• as viewed in cross section, over a height portion (10") of at least 1/3, preferably of at least 2/3, of the total height H,
• one flank (6) of the two lateral flanks has a constant inclination angle (61") and
• the other flank (7) of the two lateral flanks has a convex curvature (8') or a concave curvature (8).

2. Vehicle tyre (1) with side walls (2) and a tread (3) and with at least one marking region (4) on its outer surface, the at least one marking region (4) having an arrangement (42) of ribs (5) with an elongate extent and two lateral flanks (6, 7),
• wherein the ribs (5) have a maximum height H of 0.10 mm to 0.80 mm, preferably of 0.15 mm to 0.70 mm,
• wherein, as viewed in a cross section perpendicular to the elongate extent, at a height H1, each of the two lateral flanks (6, 7) includes an inclination angle (61, 61', 61", 71, 71') with a direction (9) perpendicular to the areal extent of the marking region (4),
• and wherein the inclination angle (61, 61', 61") of the first flank (6) of the two lateral flanks is smaller by at least 10°, preferably by at least 15°, than the inclination angle (71, 71') of the second flank (7) of the two lateral flanks,
**characterized in that**, for at least one rib (5) of the ribs,
• as viewed in cross section, over a height portion (10‴) of at least 1/3, preferably of at least 2/3, of the total height H,
• one flank (6) of the two lateral flanks has a concave curvature (8) and the other flank (7) has a convex curvature (8').

3. Vehicle tyre (1) with side walls (2) and a tread (3) and with at least one marking region (4) on its outer surface, the at least one marking region (4) having an arrangement (42) of ribs (5) with an elongate extent and two lateral flanks (6, 7),
• wherein the ribs (5) have a maximum height H of 0.10 mm to 0.80 mm, preferably of 0.15 mm to 0.70 mm,
• wherein, as viewed in a cross section perpendicular to the elongate extent, at a height H1, each of the two lateral flanks (6, 7) includes an inclination angle (61, 61', 61", 71, 71') with a direction (9) perpendicular to the areal extent of the marking region (4),
• and wherein the inclination angle (61, 61', 61") of the first flank (6) of the two lateral flanks is smaller by at least 10°, preferably by at least 15°, than the inclination angle (71, 71') of the second flank (7) of the two lateral flanks,
**characterized in that** at least one rib (5) of the ribs has a substructure (13) on one flank (6) of its two flanks, while the other flank (7) of the two flanks is free of such a substructure.

4. Vehicle tyre (1) according to one of the preceding claims, **characterized in that** at least one rib pair (11), preferably all the rib pairs (11), are formed from two adjacent ribs (5), arranged substantially parallel to one another, of the arrangement (42) in such a way
that the first flank (6) of one rib of the rib pair (11) and the second flank (7) of the other rib of the rib pair (11) face one another.

5. Vehicle tyre (1) according to at least one of the preceding claims, **characterized in that** one rib pair (11), preferably all the rib pairs (11), are formed from two adjacent ribs (5), arranged substantially parallel to one another, of the arrangement (42) in such a way that the first flanks (6) of the two ribs (5) of the respective rib pair (11) or the second flanks (7) of the two ribs (5) of the respective rib pair (11) face one another.

6. Vehicle tyre (1) according to at least one of the preceding claims, **characterized in that** the arrangement (42) has ribs (5) with different cross section.

7. Vehicle tyre (1) according to at least Claim 6, **characterized in that** the arrangement (42) has in this case an alternating arrangement of rib groups (12, 12'), wherein each rib group (12, 12') comprises one, two or more ribs (5) of identical cross section and, among one another, the rib groups (12, 12') differ from one another at least in terms of the cross section of their ribs (5).

8. Vehicle tyre (1) according to at least one of the preceding claims, **characterized in that** the marking region (4) is arranged on a side wall (2) or on a tread (3), preferably on a side wall.

9. Vehicle tyre (1) according to at least one of the preceding claims, **characterized in that** the pneumatic vehicle tyre (1) has multiple such marking regions (4) which are arranged in such a way that they constitute a machine-readable code (41), preferably a two-dimensional code, particularly preferably a QR code.

## Revendications

1. Pneumatique de véhicule (1), comprenant des parois latérales (2) et une bande de roulement (3) et au moins une zone de marquage (4) sur sa surface extérieure, ladite au moins une zone de marquage (4) présentant
un agencement (42) de nervures (5) ayant une étendue longitudinale et deux flancs latéraux (6, 7),
• dans lequel les nervures (5) présentent une hauteur maximale H de 0,10 mm à 0,80 mm, de préférence de 0,15 mm à 0,70 mm,
• dans lequel, vu en section transversale perpendiculairement à l'étendue longitudinale, à une hauteur H1, chacun des deux flancs latéraux (6, 7) forme un angle d'inclinaison (61, 61', 61", 71, 71') par rapport à une direction (9) perpendiculaire à l'étendue plane de la zone de marquage (4),
• et dans lequel l'angle d'inclinaison (61, 61', 61") du premier flanc (6) des deux flancs latéraux est inférieur d'au moins 10°, de préférence d'au moins 15°, à l'angle d'inclinaison (71, 71') du deuxième flanc (7) des deux flancs latéraux,
**caractérisé en ce que** sur au moins une nervure (5) des nervures,
• vue en section transversale, sur une portion de hauteur (10") d'au moins 1/3, de préférence d'au moins 2/3, de la hauteur totale H,
• un flanc (6) des deux flancs latéraux présente un angle d'inclinaison constant (61"), et
• l'autre flanc (7) des deux flancs latéraux présente une courbure convexe (8') ou une courbure concave (8).

2. Pneumatique de véhicule (1) comprenant des parois latérales (2) et une bande de roulement (3) et au moins une zone de marquage (4) sur sa surface extérieure, ladite au moins une zone de marquage (4) présentant
un agencement (42) de nervures (5) ayant une étendue longitudinale et deux flancs latéraux (6, 7),
• dans lequel les nervures (5) présentent une hauteur maximale H de 0,10 mm à 0,80 mm, de préférence de 0,15 mm à 0,70 mm,
• dans lequel, vu en section transversale perpendiculairement à l'étendue longitudinale, à une hauteur H1, chacun des flancs latéraux (6, 7) forme un angle d'inclinaison (61, 61', 61", 71, 71') par rapport à une direction (9) perpendiculaire à l'étendue plane de la zone de marquage (4),
• et dans lequel l'angle d'inclinaison (61, 61', 61") du premier flanc (6) des flancs latéraux est de préférence inférieur d'au moins 10°, de préférence d'au moins 15°, à l'angle d'inclinaison (71, 71') du deuxième flanc (7) des deux flancs latéraux,
**caractérisé en ce que** sur au moins une nervure (5) des nervures,
• vue en section transversale, sur une portion de hauteur (10‴) d'au moins 1/3, de préférence d'au moins 2/3, de la hauteur totale H,
• un flanc (6) des deux flancs latéraux présente une courbure concave (8) et l'autre flanc (7) présente une courbure convexe (8').

3. Pneumatique de véhicule (1) comprenant des parois latérales (2) et une bande de roulement (3) et au moins une zone de marquage (4) sur sa surface extérieure, ladite au moins une zone de marquage (4) présentant
un agencement (42) de nervures (5) ayant une étendue longitudinale et deux flancs latéraux (6, 7),
• dans lequel les nervures (5) présentent une hauteur maximale H de 0,10 mm à 0,80 mm, de préférence de 0,15 mm à 0,70 mm,
• dans lequel, vu en section transversale perpendiculairement à l'étendue longitudinale, à une hauteur H1, chacun des deux flancs latéraux (6, 7) forme un angle d'inclinaison (61, 61', 61", 71, 71') par rapport à une direction (9) perpendiculaire à l'étendue plane de la zone de marquage (4),
• et dans lequel l'angle d'inclinaison (61, 61', 61") du premier flanc (6) des deux flancs latéraux est inférieur d'au moins 10°, de préférence d'au moins 15°, à l'angle d'inclinaison (71, 71') du deuxième flanc (7) des deux flancs latéraux,
**caractérisé en ce qu'**au moins une nervure (5) des nervures présente sur un flanc (6) de ses deux flancs une sous-structure (13) tandis que l'autre flanc (7) des deux flancs est exempt d'une telle sous-structure.

4. Pneumatique de véhicule (1) selon l'une quelconque des revendications précédentes, **caractérisé en ce qu'**au moins une paire de nervures (11), de préférence toutes les paires de nervures (11), est réalisée à partir de deux nervures (5) de l'agencement (42) voisines, disposées substantiellement en parallèle l'une à l'autre de telle sorte que le premier flanc (6) de ladite une nervure de la paire de nervures (11) et le deuxième flanc (7) de l'autre nervure de la paire de nervures (11) sont tournés l'un vers l'autre.

5. Pneumatique de véhicule (1) selon au moins l'une des revendications précédentes, **caractérisé en ce qu'**une paire de nervures (11), de préférence toutes les paires de nervures (11), est réalisée à partir de deux nervures (5) de l'agencement (42) voisines, disposées substantiellement en parallèle l'une à l'autre, de telle sorte que les premiers flancs (6) des deux nervures (5) de la paire de nervures respective (11) ou les deuxièmes flancs (7) des deux nervures (5) de la paire de nervures respective (11) sont tournés les uns vers les autres.

6. Pneumatique de véhicule (1) selon au moins l'une des revendications précédentes, **caractérisé en ce que** l'agencement (42) présente des nervures (5) de section transversale différente.

7. Pneumatique de véhicule (1) selon au moins la revendication 6, **caractérisé en ce que** l'agencement (42) présente alors un agencement de groupes de nervures (12, 12') en alternance, dans lequel chaque groupe de nervures (12, 12') comprend une, deux ou plusieurs nervures (5) de section transversale identique, et les groupes de nervures (12, 12') se distinguent au moins par la section transversale de leurs nervures (5).

8. Pneumatique de véhicule (1) selon au moins l'une des revendications précédentes, **caractérisé en ce que** la zone de marquage (4) est disposée sur une paroi latérale (2) ou une bande de roulement (3), de préférence sur une paroi latérale.

9. Pneumatique de véhicule (1) selon au moins l'une des revendications précédentes, **caractérisé en ce que** le pneumatique de véhicule (1) présente plusieurs zones de marquage (4) de ce type qui sont disposées de façon à représenter un code (41) lisible par machine, de préférence un code bidimensionnel, de manière particulièrement préférée un code QR.
